# EUROPEAN PATENT APPLICATION

(11) **EP 3 232 321 A1**
(43) Date of publication of application: **18.10.2017**
(21) Application number: 16164790.4
(22) Date of filing: 12.04.2016
(51) Int. Cl.: G06F 9/38, G06F 9/30

(54) **SIGNAL PROCESSING APPARATUS WITH REGISTER FILE HAVING DUAL TWO-DIMENSIONAL REGISTER BANKS**

(71) Applicant: AptCore Ltd, Bristol BS1 6QH (GB)
(72) Inventor: STYLES, Timothy, Bristol, Bristol BS1 6QH (GB); WILDMAN, Leon, Bristol, Bristol BS1 6QH (GB)
(74) Representative: Howell, Matthew Dafydd

(57) **Abstract**

The present invention relates to signal processing apparatus (10) comprising: a first dynamically reconfigurable arithmetic computing unit (12); a second computing unit, identical to the first computing unit (14); a data memory (22); and a register file (16), the register file comprising a first register bank (18) and a second register bank (20), the signal processing apparatus (10) being configured to alternate between a first and a second phase of operation, wherein: in the first phase of operation the signal processing apparatus (10) is configured to read results data from the second register bank (20) into the data memory (22) and to write computation data from the data memory (22) into the second register bank (20) while the first and second computing units (12, 14) perform a processing operation on data read from the first register bank (18); and in the second phase of operation the signal processing apparatus (10) is configured to read results data from the first register bank (18) into the data memory (22) and to write computation data from the data memory (22) into the first register bank (18) while the first and second computing units (12, 14) perform a processing operation on data read from the second register bank (20).

## Description

### Technical Field

The present invention relates to signal processing apparatus.

### Background to the Invention

Digital Signal Processing is a key component in many of today's high technology products, such as digital communications equipment and sensor array processors. The performance required from Digital Signal Processors (DSPs) continues to increase while constraints on power and cost remain tight. These requirements are often met by the use of Single Instruction, Multiple Data (SIMD) processors, which process multiple data values in parallel.

DSP devices are typically required to perform matrix math operations, complex arithmetic operations and Fast Fourier Transform (FFT) calculations. These operations can be efficiently performed using a SIMD processor, with multiple processor units performing the same operation on different data values in parallel. The instruction stream and control logic are shared by the processor units resulting in an efficient system, but the data bandwidth remains proportional to the number of data values being processed. When the data values are processed with different constant values, such as FFT coefficients or filter coefficients, the bandwidth required to supply the constant values is also proportional to the number of data values being processed in parallel.

Typically input data to be processed by a DSP is stored in a register file, which is an area of physical memory in the DSP that is reserved for such data. The data is typically loaded into the register file from an external data memory and read from the register file by the DSP when required. The DSP writes output data to the register file when a processing operation has been performed on the input data or, in some cases, as the processing operation is performed.

A disadvantage of this approach is that before a new processing operation can be commenced, the output data from a previous processing operation must be read from the register file and replaced with the input data for the new processing operation. This can result in an undesirable delay in commencement of the new processing operation as the output data from the previous processing operation is read from the register file and replaced with the input data for the new processing operation, and periods in which the DSP is idle, leading to sub-optimal utilisation of the DSP.

### Summary of Invention

According to a first aspect of the present invention there is provided a signal processing apparatus comprising: a first dynamically reconfigurable computing unit; a second computing unit, identical to the first computing unit; a data memory; and a register file, the register file comprising a first register bank and a second register bank, the signal processing apparatus being configured to alternate between a first and a second phase of operation, wherein: in the first phase of operation the signal processing apparatus is configured to read results data from the second register bank into the data memory and to write computation data from the data memory into the second register bank while the first and second computing units perform a processing operation on data read from the first register bank; and in the second phase of operation the signal processing apparatus is configured to read results data from the first register bank into the data memory and to write computation data from the data memory into the first register bank while the first and second computing units perform a processing operation on data read from the second register bank.

The use of a register file with first and second register bank facilitates continuous operation of the signal processing apparatus, as the data memory is able to read previous results data from one of the register banks and reload that register bank with new computation data while the compute units are performing a processing operation operating on computation data in the other register bank. This approach can accelerate the processing of complex arithmetic operations and facilitates improved utilisation of the signal processing apparatus.

The first and second register banks may be two-dimensional banks of registers. A two-dimensional register bank enables efficient corner turning for matrix transpose operations and address bit reversal for Fast Fourier Transform (FFT) data re-ordering. Thus, a two-dimensional register bank is particularly suitable for use in the signal processing apparatus.

The first and second register banks may each contain 16 registers.

The first and second register banks may therefore be 4x4 register banks.

The data memory may be implemented using a single port memory device. The use of a single port memory device helps to minimise cost; single port memory devices are less expensive than dual port memory devices, for example.

The signal processing apparatus may further comprise a controller operative to receive a clock signal, and the first and second phases of operation may each last for eight cycles of the clock signal.

The controller may comprise a microcode programmable controller, for example.

The first and second compute units may be configured to read an entire row or column of a currently active register bank per cycle of the clock signal.

The first and second compute units may be configured to read the rows or columns of the currently active register bank in sequential order. For example, where the register bank is a 4x4 register bank, the first and second compute units may be configured to read a first row or column during a first cycle of the clock signal, a second row or column during a second cycle, a third row or column during a third cycle and a fourth row or column during a fourth cycle.

The first and second compute units may each comprise a complex multiplier.

The complex multiplier may comprise a control input by means of which the complex multiplier is configurable to perform complex multiplication or real multiplication.

The first and second compute units may be reconfigurable each cycle of the clock signal.

The first and second compute units may be configured to receive a common constant input value.

The signal processing apparatus may be operable to swap data values read from the first or second register bank during an operation to read the data values from the first or second register bank.

The signal processing apparatus may be operable to swap data values to be written to the first or second register bank during an operation to write the data values to the first or second register bank.

The signal processing apparatus may be operable to swap data values each cycle of the clock signal.

The signal processing apparatus may be implemented as one of: one or more integrated circuits; one or more Field Programmable Gate Arrays (FPGAs); one or more Application Specific Integrated Circuits (ASICs); one or more processors; or one or more Digital Signal Processors (DSPs).

### Brief Description of the Drawings

Embodiments of the invention will now be described, strictly by way of example only, with reference to the accompanying drawings, of which:
Figure 1 is a schematic illustration of a signal processing apparatus;
Figure 2 is a schematic illustration of compute units of the signal processing apparatus of Figure 1;
Figure 3 is a schematic illustration of a 4x4 register bank of the kind used in a register file of the signal processing apparatus of Figure 1; and
Figure 4 is a schematic timing diagram illustrating a sequence of operations performed by the signal processing apparatus of Figure 1.

### Description of the Embodiments

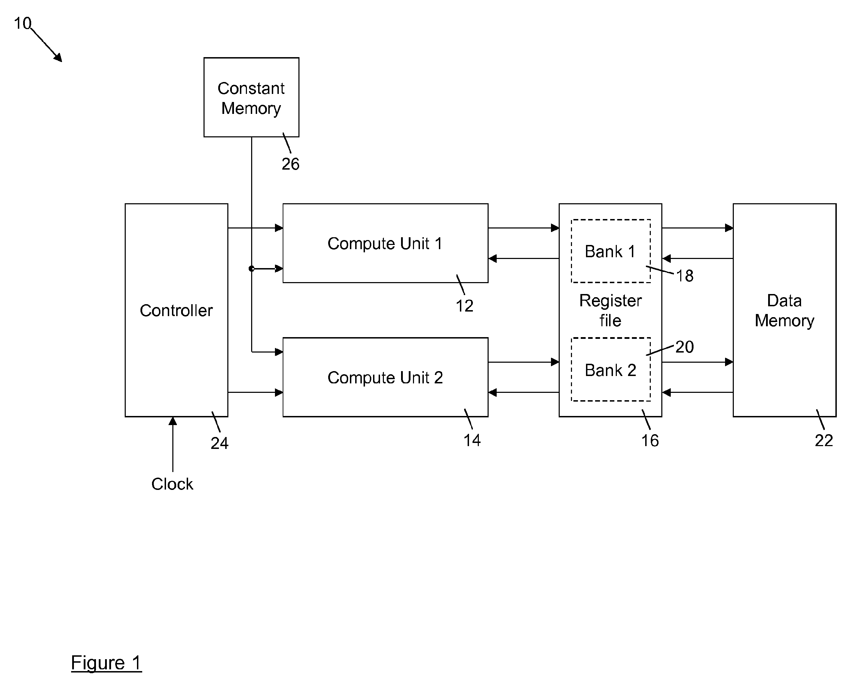

Referring first to Figure 1, a signal processing apparatus is shown generally at 10. To aid understanding of the present invention, the signal processing apparatus 10 is shown and described as comprising a number of functional units. However, it is to be appreciated that the functional units described and shown herein are not necessarily representative of physical components of a physical implementation of the signal processing apparatus.

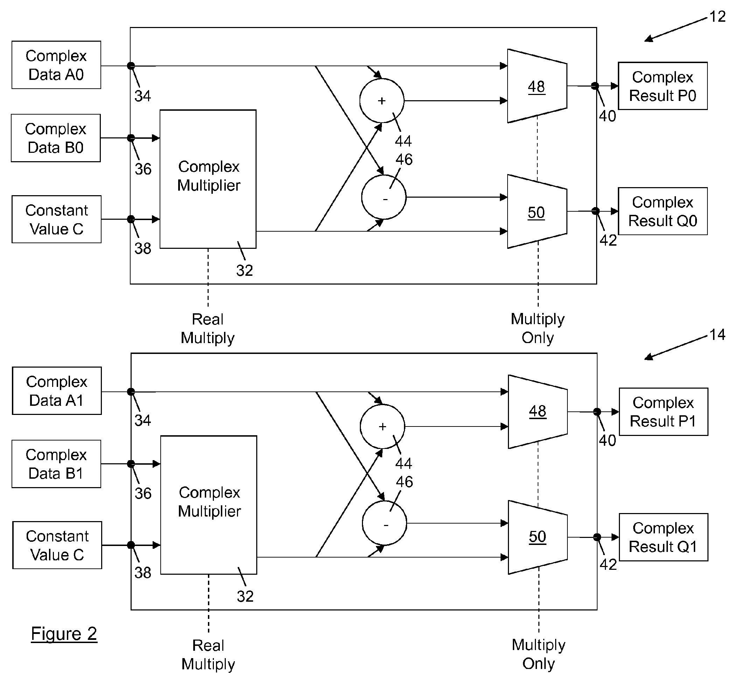

The signal processing apparatus 10 includes a first compute unit 12 and a second compute unit 14. The first and second compute units 12, 14 are each coupled to a register file 16 for bidirectional communication with the register file 16, to permit transfer of data between the first and second compute units 12, 14 and the register file 16. The first and second compute units 12, 14 will be described in more detail below with reference to Figure 2.

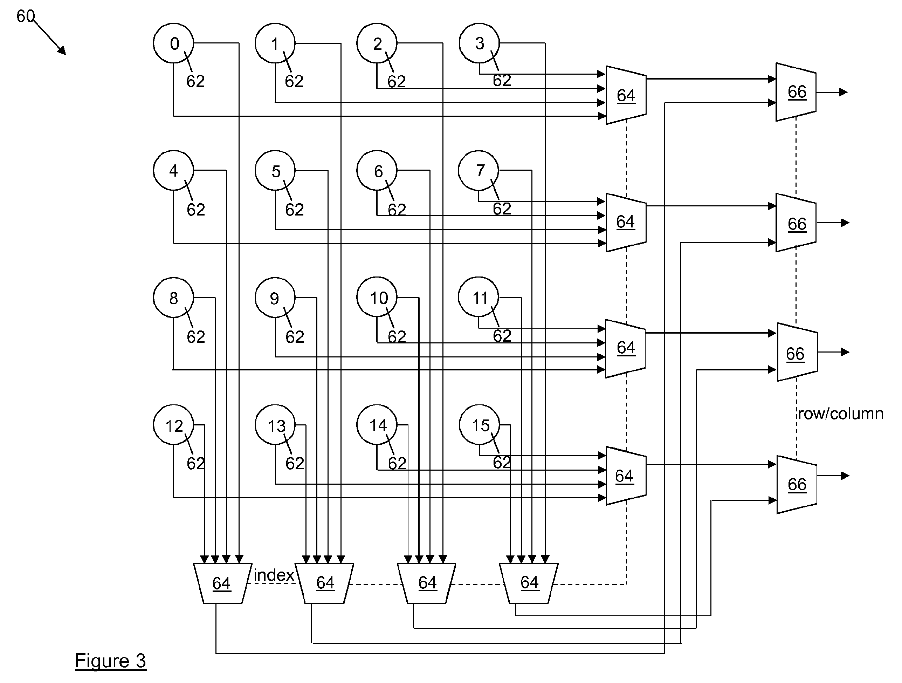

The register file 16 is a dual bank register file, having a first register bank 18 and a second register bank 20. Each of the first and second register banks 18, 20 contains a plurality of registers. For example, the first and second register banks 18, 20 may each contain sixteen registers, arranged in a two-dimensional array of dimensions 4 registers by 4 registers (referred to herein as a 4x4 register), as will be described in more detail below with reference to Figure 3.

The register file 16 is coupled to a data memory 22, for bidirectional communication with the data memory 22, to permit data transfer between the register file 16 and the data memory 22. The data memory 22 is used to store computation data (e.g. operands) for, and results of, arithmetic operations performed by the first and second compute units 12, 14. The data memory 22 may be implemented using a single port memory device, which helps to minimise the cost of the signal processing apparatus 10. The register file 16 is configured to read data from and write data to the data memory 22, and thus acts as a repository for data and results that can be accessed rapidly by the first and second compute units 12, 14. Moreover, the architecture of the register file 16 (i.e. the provision of the first and second banks 18, 20) enables multiple simultaneous operations to be performed on data stored in the register file 16, thereby reducing the number of data transfers required between the register file 16 and the data memory 22.

The first and second compute units 12, 14 are each coupled to a controller 24, which controls the operation of the signal processing apparatus 10. The controller 24 may be, for example, a microcode programmable controller which receives instructions either from a host processor of a device in which the signal processing apparatus 10 is incorporated, or from a programmable set of macro functions which are triggered by instructions from the host processor. In this way, the host processor can provide fine level instructions for proprietary algorithms whilst leaving common functions such as Fast Fourier Transform (FFT) radix algorithms to the macro instructions, thereby reducing the instruction bandwith. The controller 24 also receives a clock signal from an external clock, to ensure synchronisation of arithmetic operations performed by the signal processing apparatus 10.

The first and second compute units 12, 14 are each also coupled to a constant memory 26, which is used to store one or more constant values for use in arithmetic operations performed by the compute units 12, 14, as will be described in more detail below.

Figure 2 is a schematic illustration of the first and second compute units 12, 14. The first and second compute units 12, 14 are reconfigurable complex arithmetic units, and are identical in their structure and function. Each of the compute units 12, 14 is based around a complex multiplier 32. Each of the compute units 12, 14 has first and second complex data inputs 34, 36, a constant data input 38 and first and second complex data outputs 40, 42. The first and second complex data inputs 34, 36 are for receiving first and second complex data values, the constant data input 38 is for receiving a constant input data value from the constant memory 26 (which constant input data value is typically common to both the first and second compute units 12, 14), and the first and second complex data outputs 40, 42 are for outputting the results of complex arithmetic operations performed by the compute units 12, 14.

The first and second compute units 12, 14 are configured to operate in parallel on different computational data input to the first and second compute units 12, 14 from one of the register banks 18, 20 of the dual bank register file 16. To illustrate the different input data received by the first and second compute units 12, 14, in Figure 2 the values at the first and second complex data inputs 34, 36 of the first compute unit 12 are labelled as "Complex Data A0" and "Complex Data B0" respectively, whilst the values at the first and second complex data inputs 34, 36 of the second compute unit 14 are labelled as "Complex Data A1" and "Complex Data B1" respectively. Similarly, the results of the arithmetic operations carried out by the first and second compute units 12, 14 will be different, and thus in Figure 2 the values at the complex data outputs 40, 42 of the first compute unit 12 are labelled as "Complex Result P0" and "Complex Result Q0" respectively, whilst the values at the complex data outputs 40, 42 of the second compute unit 14 are labelled as "Complex Result P1" and "Complex Result Q1" respectively in Figure 2.

Each of the first and second compute units 12, 14 also includes an adder 44 and a subtractor 46, a first output multiplexer 48 and a second output multiplexer 50. The first output multiplexer 48 has two data inputs which are connected, respectively, to the first complex data input 34 and to an output of the adder 44. An output of the first output multiplexer 48 is connected to the first complex data output 40. The second output multiplexer 50 has two data inputs which are connected, respectively, to an output of the complex multiplier 32 and to an output of the subtractor 46. An output of the second output multiplexer 50 is connected to the second complex data output 42. The first and second output multiplexers 48, 50 each also have a control input which receives a control signal, labelled in Figure 2 as "Multiply Only", from the controller 24, which can be used to determine which of the inputs of each output multiplexer 48, 50 will be output to the first and second complex data outputs 40, 42, thereby helping to define the arithmetic function performed by each of the first and second compute units 12, 14.

The complex multiplier 32 has two inputs, which are connected, respectively, to the second complex data input 36 and to the constant data input 38. The complex multiplier 32 also has a control input which receives a control signal, labelled in Figure 2 as "Real Multiply", from the controller 24, which can be used to control the operation of the complex multiplier 32. Thus, the complex multiplier 32 can be configured to perform a complex multiplication of the values at the second complex data input 36 and the constant data input 38, or a real multiplication of those values.

An output of the complex multiplier 32 is connected to both the adder 44 and the subtractor 46 and also, as indicated above, to an input of the second output multiplexer 50. The first complex data input 34 is connected to both the adder 44 and the subtractor 46 and also, as indicated above, to an input of the first output multiplexer 48.

As can be seen from Figure 2, the configuration of the first and second compute units 12, 14 means that the outputs of the first and second compute units 12, 14 can take a number of different values, depending upon the control signals issued by the controller 24 to the to the control inputs of the complex multiplier 32 and the first and second output multiplexers 48, 50. The possible different output values of the first and second compute units 12, 14 illustrated in Figure 2 are summarised in the tables below.

**First compute unit 12**

| Complex multiplier 32 control signal | Output multiplexers 48.50 control signal | Complex Result P0 | Complex Result Q0 |
|---|---|---|---|
| *Complex multiply* | *Multiply only* | A0 | C.B0 (complex - C.B0 in this case is the complex product of C and B0) |
| *Real multiply* | *Multiply accumulate* | A0+C.B0 (real - C.B0 in this case is the product of the complex value B0 and the real part of the complex constant C) | A0-C.B0 (real - C.B0 in this case is the product of the complex value B0 and the real part of the complex constant C) |
| *Complex multiply* | *Multiply accumulate* | A0+C.B0 (complex - C.B0 in this case is the complex product of C and B0) | A0-C.B0 (complex - C.B0 in this case is the complex product of C and B0) |
| *Real multiply* | *Multiply only* | A0 | C.B0 (real - C.B0 in this case is the product of the complex value B0 and the real part of the complex constant C) |

**Second compute unit 14**

| Complex multiplier 32 control signal | Output multiplexers 48.50 control signal | Complex Result P1 | Complex Result Q1 |
|---|---|---|---|
| *Complex multiply* | *Multiply only* | A1 | C.B1 (complex - C.B1 in this case is the complex product of C and B1) |
| *Real multiply* | *Multiply accumulate* | A1+C.B1 (real - C.B1 in this case is the product of the complex value B 1 and the real part of the complex constant C) | A1-C.B1 (real - C.B1 in this case is the product of the complex value B 1 and the real part of the complex constant C) |
| *Complex multiply* | *Multiply accumulate* | A1+C.B1 (complex - C.B in this case is the complex product of C and B1) | A1-C.B1 (complex - C.B1 in this case is the complex product of C and B1) |
| *Real multiply* | *Multiply only* | A1 | C.B1 (real - C.B in this case is the product of the complex value B1 and the real part of the complex constant C) |

The arithmetic operation performed by each of the first and second compute units 12, 14 can be changed on a per-clock cycle basis by the controller 24, as the controller 24 is able to issue different control signals each cycle to the control inputs of the complex multiplier 32 and the first and second output multiplexers 48, 50. By altering the control signals issued by the controller 24 to the control inputs of the complex multiplier 32 and the first and second output multiplexers 48, 50, the first and second compute units 12, 14 can be configured and reconfigured to perform a wide variety of different arithmetic operations on the data input to them. Thus, the signal processing apparatus 10 is capable of being configured and reconfigured to perform a wide variety of different operations.

Referring now to Figure 3, a register bank of the kind used in the register file 16 of the signal processing apparatus 10 is shown in schematic form at 60. As can be seen, the register bank 60 includes a plurality (in this example 16) of data registers 62, arranged in a two-dimensional array which, in this example, comprises four rows and four columns of registers 62. In other words, the register bank 60 is a 4x4 array of registers 62. The register bank 60 also includes register selection logic, in the form of multiplexers 64, 66. The multiplexers 64 receive control signals (labelled in Figure 3 as "index") from the controller 24 to select a row and column of the register bank 60, whilst the multiplexers 66 receive control signals (labelled in Figure 3 as "row/column") from the controller 24 to select the indexed row or column. In this way a particular register or registers 62 of the register bank 60 can be read. It will be appreciated that the register bank 60 will also include logic to permit data to be written to individual ones of the registers 62. However, this logic is conventional and is not shown in Figure 3 or described here for reasons of clarity and brevity.

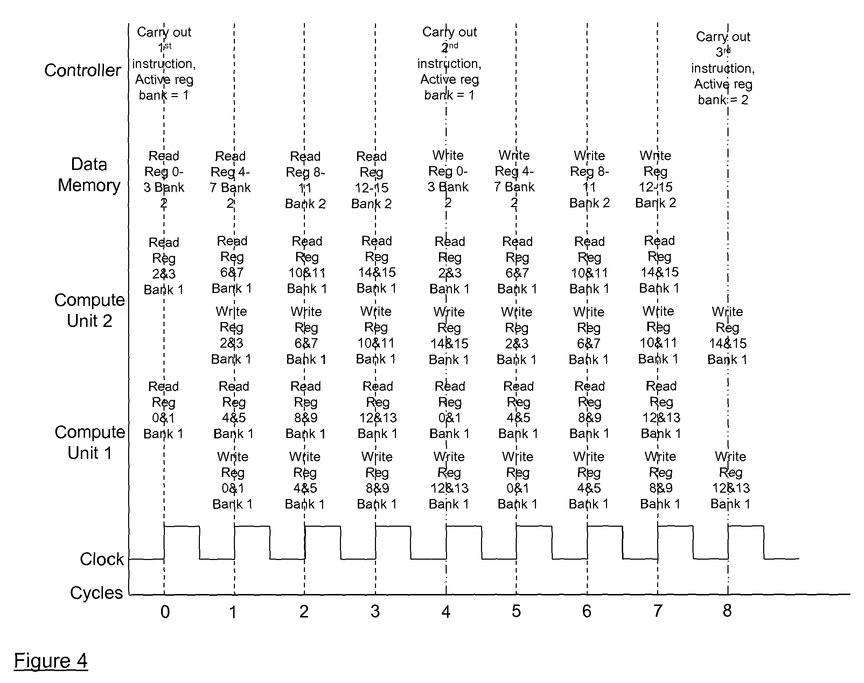

The operation of the signal processing apparatus 10 will now be described, with reference to the exemplary timing diagram of Figure 4.

Figure 4 shows an example of the timing of operations performed by the first and second compute units 12, 14, the data memory 22 and the controller 24 over a period of eight cycles of the clock signal received by the controller 24.

The period of eight cycles illustrated in Figure 4 begins when the apparatus 10 begins carrying out a first instruction received from the host processor or a macro function. At this point, the controller 24 sets one of the register banks 18, 20 of the register file 16 as the active register bank. In this context, the "active register bank" is the register bank 18, 20 from which data is being read and to which data is being written by the first and second compute units 12, 14. The other register bank 20, 18, is set as the inactive register bank. In this context, the expression "inactive register bank" refers to the register bank 20, 18 which is not being read from and written to by the first and second compute units 12, 14. However, as will become clear from the following description, the "inactive register bank" is not idle. In the example illustrated in Figure 4, the first register bank 18 is initially set as the active register bank and the second register bank 20 is initially set as the inactive register bank.

The first and second compute units 12, 14 are configured to read data from, and write data to, the active bank in synchronisation with the rising edge of a clock signal. Thus, in the example illustrated in Figure 4, the rising edge of the first cycle of the clock signal triggers the first compute unit 12 to read the first two registers 62 of the first row of the currently active first register bank 18 (i.e. the registers labelled 0 and 1 in Figure 3) and performs an arithmetic operation on those values. Simultaneously, the second compute unit 14 reads the second and third registers 62 of the first row of the currently active first register bank 18 (i.e. the registers labelled 2 and 3 in Figure 3) and performs an arithmetic operation on those values. Thus during the first cycle the data contained in the entire first row of the currently active first register bank 18 have been read from the first register bank 18 and processed by the first and second compute units 12, 14.

Over the course of the first clock cycle, the results of the arithmetic operations performed by the first and second compute units 12, 14 become available, and so at the beginning of the second clock cycle (i.e. on the rising edge of the second clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the first row of the currently active first register bank 18 (i.e. the registers labelled 0 and 1 in Figure 3), whilst the second compute unit writes the results of its arithmetic operation to the second and third registers 62 of the first row of the currently active first register bank 18 (i.e. the registers labelled 2 and 3 in Figure 3).

The rising edge of the second cycle of the clock also triggers the first compute unit 12 to read the first two registers 62 of the second row of the currently active first register bank 18 (i.e. the registers labelled 4 and 5 in Figure 3) and performs an arithmetic operation on those values. Simultaneously, the second compute unit 14 reads the second and third registers 62 of the second row of the currently active first register bank 18 (i.e. the registers labelled 6 and 7 in Figure 3) and performs an arithmetic operation on those values. Thus during the second cycle the data contained in the entire second row of the currently active first register bank 18 have been read from the first register bank 18 and processed by the first and second compute units 12, 14.

Over the course of the second clock cycle, the results of the arithmetic operations performed by the first and second compute units 12, 14 become available, and so at the beginning of the third clock cycle (i.e. on the rising edge of the third clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the second row of the currently active first register bank 18 (i.e. the registers labelled 4 and 5 in Figure 3), whilst the second compute unit writes the results of its arithmetic operation to the second and third registers 62 of the second row of the currently active first register bank 18 (i.e. the registers labelled 6 and 7 in Figure 3).

The rising edge of the third cycle of the clock also triggers the first compute unit 12 to read the first two registers 62 of the third row of the currently active first register bank 18 (i.e. the registers labelled 8 and 9 in Figure 3) and performs an arithmetic operation on those values. Simultaneously, the second compute unit 14 reads the second and third registers 62 of the third row of the currently active first register bank 18 (i.e. the registers labelled 10 and 11 in Figure 3) and performs an arithmetic operation on those values. Thus during the third cycle the data contained in the entire third row of the currently active first register bank 18 have been read from the first register bank 18 and processed by the first and second compute units 12, 14.

Over the course of the third clock cycle, the results of the arithmetic operations performed by the first and second compute units 12, 14 become available, and so at the beginning of the fourth clock cycle (i.e. on the rising edge of the fourth clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the third row of the currently active first register bank 18 (i.e. the registers labelled 8 and 9 in Figure 3), whilst the second compute unit writes the results of its arithmetic operation to the second and third registers 62 of the third row of the currently active first register bank 18 (i.e. the registers labelled 10 and 11 in Figure 3).

The rising edge of the fourth cycle of the clock also triggers the first compute unit 12 to read the first two registers 62 of the fourth row of the currently active first register bank 18 (i.e. the registers labelled 12 and 13 in Figure 3) and performs an arithmetic operation on those values. Simultaneously, the second compute unit 14 reads the second and third registers 62 of the third row of the currently active first register bank 18 (i.e. the registers labelled 14 and 15 in Figure 3) and performs an arithmetic operation on those values. Thus during the fourth cycle the data contained in the entire fourth row of the currently active first register bank 18 have been read from the first register bank 18 and processed by the first and second compute units 12, 14.

Over the course of the fourth clock cycle, the results of the arithmetic operations performed by the first and second compute units 12, 14 become available, and so at the beginning of the fifth clock cycle (i.e. on the rising edge of the fifth clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the fourth row of the currently active first register bank 18 (i.e. the registers labelled 12 and 13 in Figure 3), whilst the second compute unit writes the results of its arithmetic operation to the second and third registers 62 of the fourth row of the currently active first register bank 18 (i.e. the registers labelled 14 and 15 in Figure 3).

After four cycles, the currently first and second compute units 12, 14 have between them read all of the registers 62 of the currently active first register bank 18 and have performed their respective arithmetic operations on the values read from the registers 62 to carry out the first instruction. The first instruction therefore takes four clock cycles to carry out. After the first instruction has been carried out, a second instruction is carried out, using the results of the first instruction (that have been written to the currently active first register file 18) as the input data for the second instruction.

Thus, on the rising edge of the fifth clock cycle, the first compute unit 12 returns to the first row of the currently active first register bank 18, reads the first two registers 62 of the first row of the currently active first register bank 18 (i.e. the registers labelled 0 and 1 in Figure 3) and performs an arithmetic operation on those values. Simultaneously, the second compute unit 14 returns to the first row of the currently active first register bank 18, reads the second and third registers 62 of the first row of the currently active first register bank 18 (i.e. the registers labelled 2 and 3 in Figure 3) and performs an arithmetic operation on those values. Thus during the fifth cycle the data contained in the entire first row of the currently active first register bank 18 have been read from the first register bank 18 and processed by the first and second compute units 12, 14.

On the rising edge of the sixth clock cycle, the first compute unit 12 reads the first two registers 62 of the second row of the currently active first register bank 18 (i.e. the registers labelled 4 and 5 in Figure 3) and performs an arithmetic operation on those values. Simultaneously, the second compute unit 14 reads the second and third registers 62 of the second row of the currently active first register bank 18 (i.e. the registers labelled 6 and 7 in Figure 3) and performs an arithmetic operation on those values. Thus during the sixth cycle the data contained in the entire second row of the currently active first register bank 18 have been read from the first register bank 18 and processed by the first and second compute units 12, 14.

Over the course of the sixth clock cycle, the results of the arithmetic operations performed by the first and second compute units 12, 14 become available, and so at the beginning of the seventh clock cycle (i.e. on the rising edge of the seventh clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the second row of the currently active first register bank 18 (i.e. the registers labelled 4 and 5 in Figure 3), whilst the second compute unit writes the results of its arithmetic operation to the second and third registers 62 of the second row of the currently active first register bank 18 (i.e. the registers labelled 6 and 7 in Figure 3).

On the rising edge of the seventh clock cycle, the first compute unit 12 reads the first two registers 62 of the third row of the currently active first register bank 18 (i.e. the registers labelled 8 and 9 in Figure 3) and performs an arithmetic operation on those values. Simultaneously, the second compute unit 14 reads the second and third registers 62 of the third row of the currently active first register bank 18 (i.e. the registers labelled 10 and 11 in Figure 3) and performs an arithmetic operation on those values. Thus during the seventh cycle the data contained in the entire third row of the currently active first register bank 18 have been read from the first register bank 18 and processed by the first and second compute units 12, 14.

Over the course of the seventh clock cycle, the results of the arithmetic operations performed by the first and second compute units 12, 14 become available, and so at the beginning of the eighth clock cycle (i.e. on the rising edge of the eighth clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the third row of the currently active first register bank 18 (i.e. the registers labelled 8 and 9 in Figure 3), whilst the second compute unit writes the results of its arithmetic operation to the second and third registers 62 of the third row of the currently active first register bank 18 (i.e. the registers labelled 10 and 11 in Figure 3).

On the rising edge of the eighth clock cycle, the first compute unit 12 reads the first two registers 62 of the fourth row of the currently active first register bank 18 (i.e. the registers labelled 12 and 13 in Figure 3) and performs an arithmetic operation on those values. Simultaneously, the second compute unit 14 reads the second and third registers 62 of the fourth row of the currently active first register bank 18 (i.e. the registers labelled 14 and 15 in Figure 3) and performs an arithmetic operation on those values. Thus during the eighth cycle the data contained in the entire fourth row of the currently active first register bank 18 have been read from the first register bank 18 and processed by the first and second compute units 12, 14.

At the beginning of the ninth clock cycle (i.e. on the rising edge of the ninth clock cycle) the first and second compute units 12, 14 write the results of the arithmetic operations to the registers 62 of the currently active first register bank 18 from which the input data was read by the first and second compute units 12, 14. Thus, the first compute unit 12 writes the results of its arithmetic operation to the first two registers 62 of the fourth row of the currently active first register bank 18 (i.e. the registers labelled 12 and 13 in Figure 3), whilst the second compute unit writes the results of its arithmetic operation to the second and third registers 62 of the fourth row of the currently active first register bank 18 (i.e. the registers labelled 14 and 15 in Figure 3).

After eight cycles, the currently first and second compute units 12, 14 have between them read all of the registers 62 of the currently active first register bank 18 and have performed their respective arithmetic operations on the values read from the registers 62 to carry out the first instruction. The second instruction therefore also takes four clock cycles to carry out.

During the eight cycle period in which the first and second instructions are being carried out by the first and second compute units 12, 14, the data memory 22 is simultaneously carrying out read and write operations on the currently inactive second register bank 20 of the register file 16, to read the results of previous instructions carried out by the first and second compute units 12, 14 that have been stored in the currently inactive second register bank 20 and write new data to the currently inactive second register bank 20 for use in carrying out subsequent instructions.

Thus, during the first cycle, the data memory 22 reads the contents of the first row of the currently inactive second register bank 20 (i.e. the contents of the registers labelled 0 - 3 in Figure 3). During the second cycle, the data memory 22 reads the contents of the second row of the currently inactive second register bank 20 (i.e. the contents of the registers labelled 4 - 7 in Figure 3). During the third cycle, the data memory 22 reads the contents of the third row of the currently inactive second register bank 20 (i.e. the contents of the registers labelled 8 - 11 in Figure 3). During the fourth cycle, the data memory 22 reads the contents of the fourth row of the currently inactive second register bank 20 (i.e. the contents of the registers labelled 12 - 15 in Figure 3).

During the fifth cycle, the data memory 22 writes new data to registers of the first row of the currently inactive second register bank 20 (i.e. the registers labelled 0 - 3 in Figure 3). During the sixth cycle, the data memory 22 writes new data to registers of the second row of the currently inactive second register bank 20 (i.e. the registers labelled 4 - 7 in Figure 3). During the seventh cycle, the data memory 22 writes new data to registers of the third row of the currently inactive second register bank 20 (i.e. the registers labelled 8 - 11 in Figure 3), and during the eighth cycle, the data memory 22 writes new data to registers of the fourth row of the currently inactive second register bank 20 (i.e. the registers labelled 12 - 15 in Figure 3).

Thus, after eight cycles the first and second compute units 12, 14 have read and processed all of the data in the currently active first register bank 18, whilst the data memory has read all of the data from the currently inactive second register bank 20, and replaced the data with new data for use in carrying out subsequent instructions.

The beginning of the ninth cycle marks the commencement of a third instruction, to be carried out on the new data written to the second register bank 20 by the data memory 22 during the first eight cycles. Thus, at this point the controller 24 swaps the active and inactive register banks, such that the previously inactive second register bank 20 becomes the active register bank, and the previously active first register bank 18 becomes the inactive register bank. The process then proceeds as described above, with the data from the now-active second register bank 20 being read and processed on a row-by-row basis by the first and second compute units 12, 14 and the results being written to the registers of the now-active second register bank 20 from which the input data was read by the first and second compute units 12, 14. At the same time, the data in the now-inactive first register bank 18 is read on a row-by-row basis by the data memory 22 (during the ninth to twelfth cycles), and new data is written to the now-inactive first register bank 18 (during the thirteenth to sixteenth cycles). After sixteen cycles the controller 24 again swaps the active and inactive register banks and the process repeats.

Thus, the apparatus 10 is configured to alternate between two phases of operation. In the first phase, results data from the inactive register bank (e.g. the second register bank 20, in the first eight cycles described above) is read into the data memory 22 and new computation data is written from the data memory 22 into the inactive register bank while the first and second computing units 12, 14 perform a processing operation on data from the active register bank (e.g. the first register bank 18, in the first eight cycles described above), whilst in the second phase results data from the previously active register bank (e.g. the first register bank 18 in the second eight cycles described above) is read into the data memory 22 and new computation data is written from the data memory 22 into the previously active register bank (e.g. the first register bank 18 in the second eight cycles described above) while the first and second computing units perform a processing operation on data from the previously inactive register bank (e.g. the second register bank 20 in the second eight cycles described above).

As will be appreciated from the discussion above, the use of a register file 16 containing first and second register banks 18, 20 permits the apparatus 10 to operate continuously without any idle time, as, while first and second current instructions are carried out using data values from a currently active one of the first and second register banks 18, 20, the results of previous instructions are read from the currently inactive one of the first and second register banks 18, 20 into the data memory 22 and new data values required to carry out a subsequent pair of instructions are loaded into the currently inactive one of the first and second register banks 18, 20 from the data memory 22. On completion of a pair of instructions the active and inactive register banks 18, 20 are swapped, and the apparatus 10 is able to continue performing arithmetic operations without requiring any idle time while new data values are loaded into the register file 16.

In the example described above with reference to Figure 4, data values are read from and written to the first and second register banks 18, 20 of the register file on a row-by-row basis. Specifically, the first and second compute units 12, 14 are configured to read the rows of the currently active register bank in sequential order. For example, where the register bank is a 4x4 register bank, the first and second compute units 12, 14 are configured to read the first row during the first cycle of the clock signal, the second row during the second cycle, the third row during the third cycle and the fourth row during the fourth cycle.

However, it will be appreciated by those skilled in the art that the data values could equally be read from and written to the first and second register banks 18, 20 of the register file 16 on a column-by-column basis. Thus, the first and second compute units 12, 14 could alternatively be configured to read the columns of the currently active register bank in sequential order. For example, where the register bank is a 4x4 register bank, the first and second compute units 12, 14 are configured to read the first column during the first cycle of the clock signal, the second column during the second cycle, the third column during the third cycle and the fourth column during the fourth cycle.

It will be appreciated that the reconfigurable arithmetic units that form the first and second compute units 12, 14 permit a great deal of flexibility in terms of the arithmetic operations that can be performed by the apparatus 10. In addition to the per-cycle reconfigurability of the first and second compute units 12, 14, further flexibility and versatility is provided by the ability of the controller 24 to swap the position of data values read from and written to the first and second register banks 18, 20, as will now be explained.

Referring again to Figures 2 and 3, it can be seen that the first compute unit 12 reads complex data values A0, B0 from the register file 16. In the example described above with reference to Figure 4, the complex data values A0, B0 read by the first compute unit 12 may be, for example, the data values contained in the registers labelled 0 and 1 in Figure 3. Similarly, it can be seen that the second compute unit 14 reads complex data values A1, B1 from the register file 16. In the example described above with reference to Figure 4, the complex data values A1, B1 read by the second compute unit 14 may be, for example, the data values contained in the registers labelled 2 and 3 in Figure 3. It will therefore be appreciated that, during the first cycle as illustrated in Figure 4, the data value contained in the register labelled 0 in Figure 3 may be applied to the first complex data input 34 of the first compute unit 12, the data value contained in the register labelled 1 in Figure 3 may be applied to the second complex data input 36 of the first compute unit 12, the data value contained in the register labelled 2 in Figure 3 may be applied to the first complex data input 34 of the second compute unit 14, and the data value contained in the register labelled 3 in Figure 3 may be applied to the second complex data input 36 of the second compute unit 14.

Applying the data values from the registers labelled 1, 2, 3 and 4 in Figure 3 to the complex data inputs 34, 36 of the first and second compute units 12, 14 in this way gives rise to a first set of possible outputs of the first and second compute units 12, 14. Alternative sets of possible outputs of the compute units 12, 14 can be produced by swapping the positions of the complex data values A0, B0 and/or by swapping the positions of the complex data values A1, B1. For example, instead of applying the complex data value A0 (e.g. the data value contained in the register labelled 0 in Figure 3) to the first complex data input 34 of the first compute unit 12 and applying the complex data value B0 (e.g. the data value contained in the register labelled 1 in Figure 3) to the second complex data input 36 of the first compute unit 12, the complex data value A0 could be applied to the second complex data input 36 of the first compute unit 12 and the complex data value B0 could be applied to the first complex data input 34 of the first compute unit 12. Similarly, instead of applying the complex data value A1 (e.g. the data value contained in the register labelled 2 in Figure 3) to the first complex data input 34 of the second compute unit 14 and applying the complex data value B1 (e.g. the data value contained in the register labelled 3 in Figure 3) to the second complex data input 36 of the second compute unit 14, the complex data value A1 could be applied to the second complex data input 36 of the second compute unit 14 and the complex data value B1 could be applied to the first complex data input 34 of the second compute unit 14.

This swapping of the complex input data values (e.g. A0 and B0 and/or A1 and B1) can be implemented by the controller 24 by issuing appropriate control signals in the process of reading the complex data values from the currently active one of the first and second register banks 18, 20 of the register file 16.

Referring again to Figures 2 and 3, it can be seen that the first compute unit 12 writes complex data values P0, Q0 to the currently active register bank 18, 20 of the register file 16, whilst the second compute unit 14 writes complex data values P1, Q1 to the currently active register bank 18, 20 of the register file 16. In the example described above with reference to Figure 4, the complex data values P0, Q0 may be written by the first compute unit 12 to the registers labelled 0 and 1 in Figure 3 and the complex data values P1, Q1 may be written by the second compute unit 14 to the registers labelled 2 and 3 in Figure 3.

The controller 24 may swap the destination registers for the complex data values P0 and Q0 and P1 and Q1. For example, instead of writing the complex data value P0 to the register labelled 0 in Figure 3 and writing the complex data value Q0 to the register labelled 1 in Figure 3, the controller 24 may cause the complex data value P0 to be written to the register labelled 1 in Figure 3 and the complex data value Q0 to be written to the register labelled 0 in Figure 3. Similarly, instead of writing the complex data value P1 to the register labelled 2 in Figure 3 and writing the complex data value Q1 to the register labelled 3 in Figure 3, the controller 24 may cause the complex data value P1 to be written to the register labelled 3 in Figure 3 and the complex data value Q1 to be written to the register labelled 2 in Figure 3.

The controller 24 may also swap the destination registers for the complex data values Q0 and P1. For example, instead of writing the complex data Q0 to the register labelled 1 in Figure 3 and writing the complex data value P1 to the register labelled 2 in Figure 3, the controller 24 may cause the complex data value Q0 to be written to the register labelled 2 in Figure 3 and the complex data value Q1 to be written to the register labelled 1 in Figure 3.

This swapping of the destination registers for the output complex data values can be implemented by the controller 24, by issuing appropriate control signals in the process of writing the output complex data values to the currently active one of the first and second register banks 18, 20 of the register file 16.

As with the reconfiguration of the compute units, the swapping of the complex input data values and the swapping of the destination registers for the output complex data values can be performed on a per-cycle basis, since the controller 24 is able to issue new control signals to control the swapping every cycle.

The continuous operation of the apparatus 10, as well as the possibility of per-cycle reconfiguration of the compute units 12, 14, per-cycle swapping of input complex data values as they are read from active register bank of the register file 16 and per-cycle swapping of the destination registers for the output complex values as they are written to the active register bank of the of the register file 16 permits complicated signal processing operations to be performed in a minimal number of cycles, thereby reducing the time required to perform such operations. For example, four independent radix-4 FFT butterflies can be computed in 8 cycles by the apparatus 10.

Thus, it will be appreciated that the signal processing apparatus described herein with reference to the accompanying drawings provides a flexible, versatile and efficient signal processing architecture which is suitable for a great many applications.

The signal processing apparatus 10 has been described herein in terms of functional units. It will be appreciated that the signal processing apparatus 10 may be implemented in many different ways, for example using one or more Application Specific Integrated Circuits (ASICs), Field Programmable Gate Arrays (FPGAs), bespoke Integrated Circuits (ICs) or Digital Signal Processors (DSPs). The signal processing apparatus may also be implemented in software running on appropriately configured processing hardware.

## Claims

1. Signal processing apparatus comprising:
a first dynamically reconfigurable arithmetic computing unit;
a second computing unit, identical to the first computing unit;
a data memory; and
a register file, the register file comprising a first register bank and a second register bank, the signal processing apparatus being configured to alternate between a first and a second phase of operation, wherein:
in the first phase of operation the signal processing apparatus is configured to read results data from the second register bank into the data memory and to write computation data from the data memory into the second register bank while the first and second computing units perform a processing operation on data read from the first register bank; and
in the second phase of operation the signal processing apparatus is configured to read results data from the first register bank into the data memory and to write computation data from the data memory into the first register bank while the first and second computing units perform a processing operation on data read from the second register bank.

2. Signal processing apparatus according to claim 1 wherein the first and second register banks satisfy one or more of the following conditions:
the first and second register banks are two-dimensional banks of registers;
the first and second register banks each contain 16 registers; or
the first and second register banks are 4x4 register banks.

3. Signal processing apparatus according to any one of the preceding claims wherein the data memory is implemented using a single port memory device.

4. Signal processing apparatus according to any one of the preceding claims further comprising a controller operative to receive a clock signal, wherein the first and second phases of operation each last for eight cycles of the clock signal.

5. Signal processing apparatus according to claim 4 wherein the controller comprises a microcode programmable controller.

6. Signal processing apparatus according to claim 4, where dependent upon claim 2, wherein the first and second compute units are configured to read an entire row or column of a currently active register bank per cycle of the clock signal.

7. Signal processing apparatus according to claim 6 wherein the first and second compute units are configured to read the rows or columns of the currently active register bank in sequential order.

8. Signal processing apparatus according to any one of the preceding claims wherein the first and second compute units each comprise a complex multiplier.

9. Signal processing apparatus according to claim 8 wherein the complex multiplier comprises a control input by means of which the complex multiplier is configurable to perform complex multiplication or real multiplication.

10. Signal processing apparatus according to any one of the preceding claims, wherein the first and second compute units are reconfigurable each cycle of the clock signal.

11. Signal processing apparatus according to any one of the preceding claims wherein the first and second compute units are configured to receive a common constant input value.

12. Signal processing apparatus according to any one of the preceding claims wherein the signal processing apparatus is operable to swap data values read from the first or second register bank during an operation to read the data values from the first or second register bank.

13. Signal processing apparatus according to any one of the preceding claims wherein the signal processing apparatus is operable to swap data values to be written to the first or second register bank during an operation to write the data values to the first or second register bank.

14. Signal processing apparatus according to claim 12 or claim 13, where dependent upon claim 4, wherein the signal processing apparatus is operable to swap data values each cycle of the clock signal.

15. Signal processing apparatus according to any one of the preceding claims wherein the signal processing apparatus is implemented as one of: one or more integrated circuits; one or more Field Programmable Gate Arrays (FPGAs); one or more Application Specific Integrated Circuits (ASICs); one or more processors; or one or more Digital Signal Processors (DSPs).
